# EUROPEAN PATENT SPECIFICATION

(11) **EP 2 919 974 B1**
(45) Date of publication and mention of the grant of the patent: **03.05.2017**
(21) Application number: 13796009.2
(22) Date of filing: 30.10.2013
(51) Int. Cl.: B29D 11/00, B24B 13/005, B24B 49/12

(54) **METHOD OF MANUFACTURING AN OPTICAL LENS**
VERFAHREN ZUR HERSTELLUNG EINER OPTISCHEN LINSE
PROCÉDÉ DE FABRICATION D'UNE LENTILLE OPTIQUE

(30) Priority: 19.11.2012 EP 12306434
(43) Date of publication of application: 23.09.2015
(73) Proprietor: Essilor International (Compagnie Générale d'Optique), 94220 Charenton-le-Pont (FR)
(72) Inventor: GACOIN, Eric, F-94220 Charenton-le-Pont (FR); GOURRAUD, Alexandre, F-94220 Charenton-le-Pont (FR); LE BOUILLONNEC, Pascal, F-94220 Charenton-le-Pont (FR)
(74) Representative: Cabinet Novitech
(86) International application number: PCT/EP2013/072731
(87) International publication number: WO 2014/075924

(56) References cited:
- WO-A1-94/06598
- WO-A1-98/45750
- JP-A- 2012 058 648
- US-A1- 2010 228 375

## Description

The invention relates to a method of manufacturing an optical lens and a method for controlling a lens manufacturing process.

The discussion of the background of the invention herein is included to explain the context of the invention. This is not to be taken as an admission that any of the material referred to was published, known or part of the common general knowledge at the priority date of any of the claims.

An optical lens is typically made of plastic material and generally has two opposing surfaces which co-operate with one another to provide a required refractive property, generally corresponding to the wearer's prescription. When the positioning or shape of one of these surfaces with respect to the other is inaccurate, the required refractive property may not be respected.

Manufacturing of an optical lens to the required refractive property typically includes machining the surface of a semi-finished lens or lens blank. Typically, a semi-finished lens has a finished surface, for example the front surface and an unfinished surface, for example the back surface. By machining the back surface of the lens to remove material, the required shape and positioning of the back surface with respect to the front surface for the desired corrective prescription can be generated.WO-A-94/06598 discloses a method of manufacturing an optical lens with a first reference system being identified by first markings on a first surface. During manufacturing of the lens it is important that the semi-finished lens is securely maintained in an accurate position on a blocker during the various manufacturing operations in order to prevent the generation of optical errors.

Conventionally, a semi-finished lens is provided with engraved markings on the finished surface. The engraved markings define a reference system of the design of the finished surface of the lens.

For some optical designs, for example when both surfaces have asymmetrical designs, controlling accurately the relative position of the optical surfaces is very important so as to guarantee the desired optical function.

When after having manufactured an optical lens, a skilled person wishes to check the relative positions of the optical surfaces of the manufactured optical lens; he needs to realize a full optical function measurement and/or a 3D surfaces measurement of the optical lens. These methods are very time consuming and costly.

Therefore, there is a need for a method of manufacturing an optical lens that allows an easy check of the relative position of the optical surfaces of the manufactured optical lens.

To this end, the invention proposes a method of manufacturing an optical lens, the method comprising:
- a lens member providing step during which a lens member comprising a first surface and a first reference system of the first surface is provided, the first reference system being identified by first markings on the first surface,
- a surface data providing step during which surface data corresponding to a second surface and the position of the second surface relative to the first surface of the optical lens to be manufactured are provided,
- a lens member blocking step during which the lens member is blocked in a machining position,
- a machining step during which the second surface of the optical lens is machined according to the surface data,
- a second marking providing step during which second markings identifying a second reference system of the second surface are provided on the second surface of the optical lens,
- a reference system determining step during which the first and second reference systems are determined by measuring the positions of the first and second markings, and
- a comparison step during which the positions of the first and second reference systems are compared so as to estimate the positioning error between the first and second surfaces.

Advantageously, having the first markings identifying the first reference system of the first surface and providing second markings identifying a second reference system of the second surface allows a determination of the positioning error between the first and second surfaces. Indeed by determining and comparing the positions of the first and second markings one may determine the positioning error between the first and second surfaces.

According to further embodiments which can be considered alone or in combination:
- the method further comprises a sorting step during which the manufactured optical lens is accepted if the positioning error between the first and second surfaces is smaller than or equal to a threshold value and is set aside if the positioning error between the first and second surfaces is greater than said threshold value; and/or
- during the reference system determining step the positions of the first and second markings are measured using a measuring optical device and considering observation data representing at least the position of the optical lens relative to the measuring optical device; and/or
- during the second marking providing step the optical lens is blocked in the same position as during the machining step; and/or
- during the determining step the optical lens is blocked in the same position as during the machining step; and/or
- the first and/or second markings are temporary markings; and/or
- during the determining step the first and second markings are measured in reflection; and/or
- during the determining step one of the first or second markings are measured in reflection and the other one of the first or second markings are measured in transmission trough the optical lens according at least to optical data representing the refractive properties of the optical lens; and/or
- the optical data represent at least the optical design of the first and second surfaces and the relative position of the second surface relative to the first surface; and/or
- the optical data represent at least the prescription of the wearer for which the optical lens is manufactured.

The invention also relates to a method for controlling a lens manufacturing process comprising:
- an optical lens manufacturing step during which an optical lens is manufactured according to a manufacturing method according to the invention using a manufacturing device,
- a recording step during which the positioning error is recorded,
wherein, the method further comprises repeating regularly optical lens manufacturing and recording steps and checking the evolution of the positioning error over time, and
the evolution of at least one parameter of the manufacturing device used during the lens manufacturing process is checked over time and the evolution over time of the positioning error of the first and second surfaces of the optical lens is related with the evolution over time of the at least one parameter of the manufacturing device.

The invention further relates to a method for controlling a lens manufacturing process comprising:
- a master lens manufacturing step during which a master lens is manufactured according to a manufacturing method according to the invention using a manufacturing device,
- a recording step during which the positioning error is recorded,
wherein, the method further comprises repeating regularly master lens manufacturing and recording steps and checking the evolution of the positioning error over time, and
the evolution of at least one parameter of the manufacturing device used during the lens manufacturing process is checked over time and the evolution over time of the positioning error of the first and second surfaces of the master lens is related with the evolution over time of the at least one parameter of the manufacturing device.

According to a further aspect, the invention relates to a computer program product comprising one or more stored sequences of instructions that are accessible to a processor and which, when executed by the processor, causes the processor to carry out the steps of the method according to the invention.

The invention further relates to a computer readable medium carrying one or more sequences of instructions of the computer program product according to the invention.

Furthermore, the invention relates to a program which makes a computer execute the method of the invention.

The invention also relates to a computer-readable storage medium having a program recorded thereon; where the program makes the computer execute the method of the invention.

The invention further relates to a device comprising a processor adapted to store one or more sequence of instructions and to carry out at least one of the steps of the method according to the invention.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.
Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

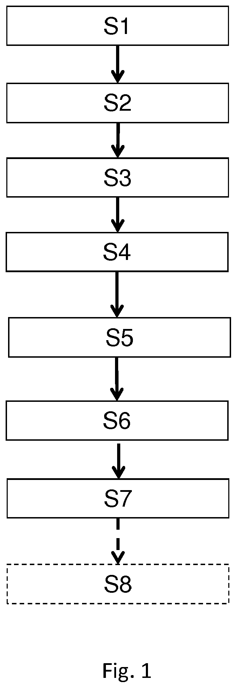

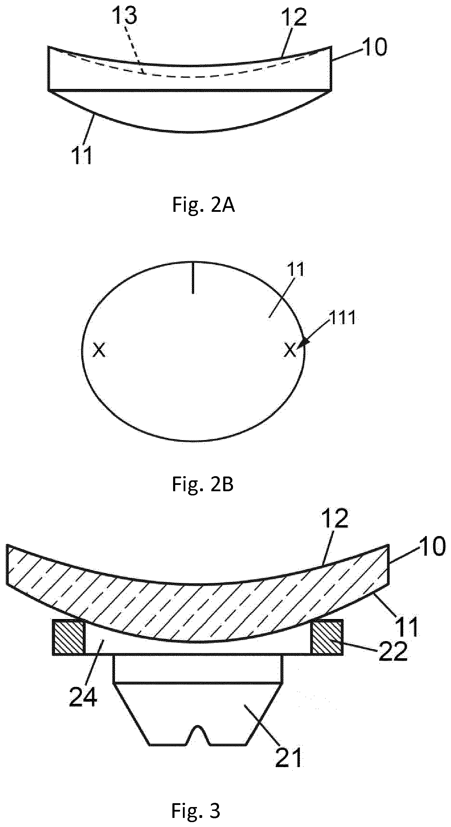

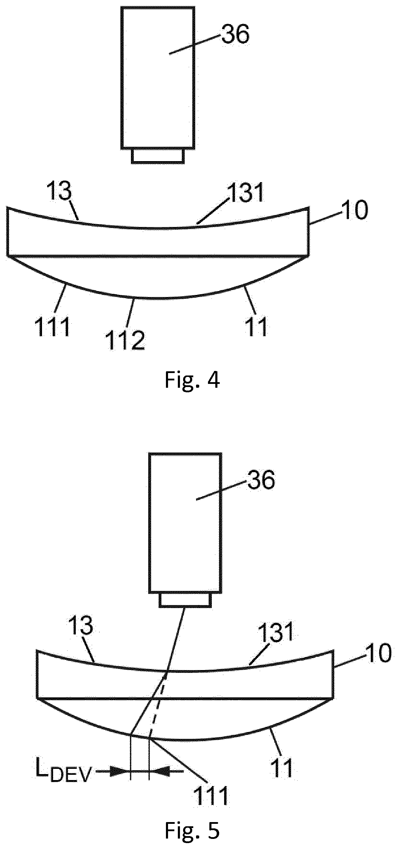

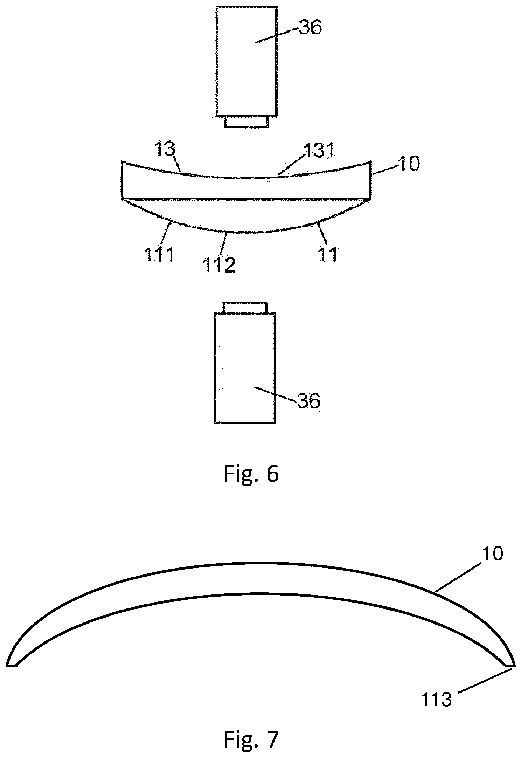

Non limiting embodiments of the invention will now be described with reference to the accompanying drawings in which:
∘ figures 1 is flowchart representing the steps of a method according to an embodiment of the invention,
∘ figure 2A is schematic view of an optical lens member to be manufactured according to embodiments of the invention,
∘ figure 2B is a planar view of a preformed surface of a semi-finished lens member to be machined according to embodiments of the invention,
∘ figure 3 is a schematic representation of a lens member and blocking device,
∘ figure 4 is a schematic view of a digital camera viewing a manufactured optical lens according to an embodiment of the invention,
∘ figure 5 schematically illustrates the effect of the refractive properties of a manufactured optical lens on the determination of the position of the markings on the manufactured optical lens,
∘ figure 6 is a schematic view of a digital camera viewing an manufactured optical lens according to an embodiment of the invention, and
∘ figure 7 is a schematic representation of a manufactured optical lens according to an embodiment of the invention.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

In the sense of the invention, a "Design" is a widely used wording known from the man skilled in the art to designate the set of parameters allowing defining an optical function of a generic optical system; each ophthalmic lens manufacturer has its own designs, particularly for aspherical lens and for progressive lens. As for an example, a progressive lens "design" results of an optimization of the progressive surface so as to restore a presbyope's ability to see clearly at all distances but also to optimally respect all physiological visual functions such as foveal vision, extra-foveal vision, binocular vision and to minimize unwanted astigmatisms.

In the sense of the invention "manufacturing parameters" are the setting parameters of the different manufacturing devices involved in the manufacturing method. In the sense of the invention "method parameter" includes any measurable parameters on the manufacturing devices used for the manufacturing of the lens.

According to an embodiment of the invention illustrated on figure 1, the method of manufacturing an optical lens according to the invention comprises at least:
- a lens member providing step S 1,
- a surface data providing step S2,
- a lens member blocking step S3,
- a machining step S4,
- a second markings providing step S5,
- a reference system determining step S6, and
- a comparison step S7.

During the lens member providing step S1, a lens member as represented on figure 2A is provided.

As represented on figure 2A the lens member 10 has a first surface with a first design, for example a preformed front surface 11. In use of the resulting finished optical lens, the preformed front surface 11 is disposed nearest the object being viewed and a second surface 12 to be modified by the manufacturing process to provide for example the back surface 13 of the finished optical lens, represented by the dotted line. Second surface 12 is machined by a machining tool so that the back surface 13 is orientated with respect to and distanced from the front surface 11, according to the required optical prescription.

While in this embodiment of the invention, the first surface is the front surface of the lens member and the second surface is the back surface, it will be understood, that in alternative embodiments of the invention the first surface may be the back surface of the semi-finished lens member and the second surface may be the front surface.

Furthermore, while in this embodiment of the invention, the back surface of the optical lens is formed by the machining process, it will be understood, that in alternative embodiments of the invention both or either surfaces of the lens may be formed by the machining process.

Moreover, although the surface 13 to be manufactured is represented in Figure 2A as concave, it will be appreciated that this surface 13 could equally well be convex or any other curved surface.

With reference to Figure 2B, first markings 111 are provided on the first surface 11 of lens member 10 as reference features for defining a first reference system for positioning of the first design of the first surface 11.

According to an embodiment of the invention, the markings 111 may be engraved marking have a depth of a few micrometers so as to limit the risk of disturbing the wearer of the resulting finished optical lens.

According to an alternative embodiment of the invention, the markings 11 may be temporary markings that may be remove before providing the manufactured optical lens to the wearer.

During the surface data providing step S2, surface data corresponding to a second surface of the optical lens to be manufactured are provided. The surface data correspond to the surface to be manufactured on the second surface 12 and the position of the second surface relative to the first surface so that the optical lens combining the manufactured back surface 13 and the front surface provides the required optical function. The surface data can be determined according to the front preformed surface and the wearer's prescription.

During the lens member blocking step S3, the lens member 10 is blocked in a machining position. During the machining step S4 the second surface of the optical lens is machined according to the surface data such that the desired optical properties of the optical lens are respected.

According to an embodiment of the invention, the method may comprise prior to the lens member blocking step S3 a lens blocker providing step.

Referring now to Figure 3, a lens blocking device for blocking lens member 10 in the correct position for manufacturing processes comprises an insert 21 and a blocking ring 22. Blocking cast material 24 is poured into the cavity defined by the lower surface of the lens member 10, the insert 21 and the blocking ring 22. The blocking cast material 24 cools to solidify in order to provide a blocker for the lens member 10 at the desired positioning for machining. The blocker comprises the machining reference frame in which the machining data are expressed.

Second markings are provided on the second surface of the optical lens during the second markings providing step S6. The second markings identify a second reference system of the second surface.

According to an embodiment of the invention, the second markings are engraved markings having a depth of a few micrometers so as to limit the risk of disturbing the wearer of the resulting finished optical lens.

According to an alternative embodiment, the second markings are temporary markings that may be removed before providing the manufactured optical lens to the wearer.

According to an embodiment of the invention, the second markings providing step is realized with the same machining device as the machining step and the optical lens is maintained in same position. Advantageously, having the optical lens maintained in the same position during the machining and second markings providing steps guaranties that no positioning error is introduced between the second markings and the second surface.

During the reference system determining step S6, the positions of the first and second markings are determined. The first and second reference systems can be determined based on the positions of the first and second markings.

According to an embodiment of the invention, the positions of the first and second markings are compared in a common reference system, for example in the manufactured optical lens reference frame. The optical lens reference frame can be defined using the blocker if the lens has been maintained on the blocker, or by the normal to one of the surfaces of the optical lens passing through the prism reference point as defined by a harmonized standard ISO 8980.

The positioning error between the first and second surfaces is determined by comparing the positions of the first and second reference systems during the comparison step S7.

According to an embodiment of the invention, the positions of the first and second reference systems are compared in a common reference system, for example in the manufactured optical lens reference frame. The optical lens reference frame can be defined using the blocker if the lens has been maintained on the blocker, or by the normal to one of the surfaces of the optical lens passing between the reference-markings that have been made mandatory by a harmonized standard ISO 8980.

As illustrated on figure 4, the positions of the first and second reference markings can be determined using a digital camera 36.

For example the first markings 111 provided on the first surface 11 of the manufactured optical lens are viewed through the manufactured optical lens 10 by means of the camera 36 which is positioned along the cylindrical axis extending through the central marking 211 of the blocking device 20.

The second markings 131 provided on second surface 13 of the manufactured optical lens 10 are measured in reflection, i.e. viewed directly by the camera 36.

Deviation Ldev of the image of the first markings 111 located on the first surface 11 of the manufactured optical lens 10 due to refractive properties of the manufactured lens member 10 is taken into account when measuring the first markings 111 as illustrated on figure 5.

The refractive properties of the manufactured lens member 10 may depend on the optical design of the first and second surfaces, the wearer's prescription and the position of the second surface relative to the first surface, for example the thickness and prism of the manufactured optical lens and the optical index.

While in this embodiment, the first markings are measured in transmission and the second markings are measured in reflection, it will be understood, that in alternative embodiments of the invention the first markings can be measured in reflection and the second markings in transmission.

Furthermore, although in this embodiment, the first markings are viewed through the manufactured optical lens 10, it will be appreciated that in alternative embodiments of the invention, the first and second markings can be viewed directly by placing the camera 36 alternatively on one side and the other of the manufactured optical lens 10 as illustrated on figure 6.

According to an embodiment of the invention, the first and second markings can be viewed directly by using two cameras facing each other and placing the manufactured optical lens 10 between the two cameras.

Furthermore, although in the previously described embodiments, the markings are viewed using large field cameras, i.e. the angle of view of the camera allows viewing the entire surfaces of the manufactured optical lens, it will be appreciated that in alternative embodiments of the invention, the markings can be viewed by using a mobile camera having a small angle of view, for example the angle of view allows viewing each markings individually. The movements of the mobile camera along the surfaces to view the markings are recorded so as to determine the positions of the markings on the surfaces.

According to an embodiment illustrated on figure 7, during the machining step S4, the second surface of the manufactured optical lens is facetted. A facet 113, of for example less than 1 mm, is cut on the edge of the second surface so as to provide a plan surface on which the manufactured optical lens can be placed for observing the markings. Advantageously such facet provides a tilt reference when observing the markings on the manufactured optical lens. The plan surface of the facet may be parallel to the plan tangent to the surface of the manufactured optical lens at a reference control point, for example the prism reference point, or the near vision control point, or the far vision control point or any other control point.

As illustrated on figure 1, the method according to the invention may also comprise a sorting step S8, during which the manufactured optical lens is accepted if the positioning error between the first and second surfaces is smaller than or equal to a threshold value and is set aside if the positioning error between the first and second surfaces is greater than said threshold value.

According to different embodiments of the invention, the threshold value may depend on the prescription of the wearer and/or the design of one or both surfaces and/or the curvature variations of one or both of the surfaces.

The invention also relates to a method for controlling a lens manufacturing process. The method for controlling a lens manufacturing process comprises the steps of:
a) manufacturing an optical lens according to a manufacturing method of the invention using a manufacturing device,
b) recording the determined positioning error,
c) repeating regularly step a) and b) and checking over time the evolution of the positioning error.

The evolution of at least one parameter of the manufacturing device used during the lens manufacturing process is checked over time and the evolution over time of the positioning error of the first and second surfaces of the optical lens is related with the evolution over time of the at least one parameter of the manufacturing device.

Advantageously, the method according to the invention allows controlling certain method or device parameters of the machining process. Indeed, the position error can be correlated to some of the machining device parameters, thus controlling the evolution over time of the positioning error can help identify a drift or shift of a machining device parameter.

According to an embodiment of the invention, the optical lenses manufactured when repeating step a) may be different optical lenses from one repetition to the other.

According to an embodiment of the invention the optical lens manufactured during step a) may be a master lens.

The master lens has a different geometrical and/or optical parameter and/or is made of a different material than the lenses to be manufactured during the manufacturing process.

The choice of the master lens can be done so as to amplify the sensibility of certain parameter to the process parameters. For example, the master lens is made of a material and has a design such as its optical parameters are more sensible to a modification of the process parameter that the usual manufactured lenses.

The choice of the master lens can be done so as to simplify the observation conditions, for example the master lens may comprise two plane and parallel surfaces.

Advantageously, the use of a master lens makes the correlation between a shift in the positioning error and a parameter of the manufacturing device used during the lens manufacturing process easier and more reliable.

For example, the master lens may be manufactured daily or several times per day or a regular basis not every day so as to check the parameters of the manufacturing device.

The invention has been described above with the aid of embodiments without limitation of the general inventive concept. In particular, the reference system determining step has been described using a camera, it will be understood, that any determining device allowing to determine the positions of the first and second markings can be used.

## Claims

1. Method of manufacturing an optical lens, the method comprising:
• a lens member providing step (S1) during which a lens member comprising a first surface and a first reference system of the first surface is provided, the first reference system being identified by first markings on the first surface,
• a surface data providing step (S2) during which surface data corresponding to a second surface and the position of the second surface relative to the first surface of the optical lens to be manufactured are provided,
• a lens member blocking step (S3) during which the lens member is blocked in a machining position,
• a machining step (S4) during which the second surface of the optical lens is machined according to the surface data,
• a second marking providing step (S5) during which second markings identifying a second reference system of the second surface are provided on the second surface of the optical lens,
• a reference system determining step (S6) during which the first and second reference systems are determined by measuring the positions of the first and second markings, and
• a comparison step (S7) during which the positions of the first and second reference systems are compared so as to estimate the positioning error between the first and second surfaces.

2. The method according to claim 1, wherein the method further comprises a sorting step (S8) during which the manufactured optical lens is accepted if the positioning error between the first and second surfaces is smaller than or equal to a threshold value and is set aside if the positioning error between the first and second surfaces is greater than said threshold value.

3. The method according to claim 1 or 2, wherein during the reference system determining step the positions of the first and second markings are measured using a measuring optical device and considering observation data representing at least the position of the optical lens relative to the measuring optical device.

4. The method according to any of the preceding claims, wherein during the second marking providing step the optical lens is blocked in the same position as during the machining step.

5. The method according to any of the preceding claims, wherein during the reference system determining step the optical lens is blocked in the same position as during the machining step.

6. The method according to any of the preceding claims, wherein the first and/or second markings are temporary markings.

7. The method according to any of the preceding claims, wherein during the determining step the first and second markings are measured in reflection.

8. The method according to any of claims 2 to 6, wherein during the determining step one of the first or second markings are measured in reflection and the other one of the first or second markings are measured in transmission trough the optical lens according at least to optical data representing the refractive properties of the optical lens.

9. The method according to claim 8, wherein the optical data represent at least the optical design of the first and second surfaces and the relative position of the second surface relative to the first surface.

10. The method according to claim 8 or 9, wherein the optical data represent at least the prescription of the wearer for which the optical lens is manufactured.

11. A method for controlling a lens manufacturing method comprising:
- an optical lens manufacturing step during which an optical lens is manufactured according to a manufacturing method as claimed in any of the preceding claims using a manufacturing device,
- a recording step during which the positioning error is recorded,
wherein, the method further comprises repeating regularly optical lens manufacturing and recording steps and checking the evolution of the positioning error over time, and
the evolution of at least one parameter of the manufacturing device used during the lens manufacturing process is checked over time and the evolution over time of the positioning error of the first and second surfaces of the optical lens is related with the evolution over time of the at least one parameter of the manufacturing device.

12. A method for controlling a lens manufacturing method comprising:
- a master lens manufacturing step during which a master lens is manufactured according to a manufacturing method as claimed in any of claims 1 to 9 using a manufacturing device,
- a recording step during which the positioning error is recorded,
wherein, the method further comprises repeating regularly master lens manufacturing and recording steps and checking the evolution of the positioning error over time, and
the evolution of at least one parameter of the manufacturing device used during the lens manufacturing process is checked over time and the evolution over time of the positioning error of the first and second surfaces of the master lens is related with the evolution over time of the at least one parameter of the manufacturing device.

13. A computer program product comprising one or more stored sequences of instructions that are accessible to a processor and which, when executed by the processor, causes the processor to carry out the steps of any of claims 1 to 12.

14. A computer readable medium carrying one or more sequences of instructions of the computer program product of claim 13.

## Patentansprüche

1. Verfahren zum Herstellen einer optischen Linse, wobei das Verfahren Folgendes umfasst:
• einen Schritt zum Bereitstellen eines Linsenelements (S1), bei dem ein Linsenelement bereitgestellt wird, das eine erste Oberfläche und ein erstes Bezugssystem der ersten Oberfläche umfasst, wobei das erste Bezugssystem durch erste Markierungen auf der ersten Oberfläche identifiziert wird,
• einen Schritt zum Bereitstellen von Oberflächendaten (S2), bei dem Oberflächendaten, die einer zweiten Oberfläche und der Position der zweiten Oberfläche relativ zur ersten Oberfläche der herzustellenden optischen Linse entsprechen, bereitgestellt werden,
• einen Schritt zum Halten eines Linsenelements (S3), bei dem das Linsenelement in einer Bearbeitungsposition gehalten wird,
• einen Bearbeitungsschritt (S4), bei dem die zweite Oberfläche der optischen Linse gemäß den Oberflächendaten bearbeitet wird,
• einen Schritt zum Bereitstellen von zweiten Markierungen (S5), bei dem zweite Markierungen, die ein zweites Bezugssystem der zweiten Oberfläche identifizieren, auf der zweiten Oberfläche der optischen Linse bereitgestellt werden,
• einen Schritt zum Bestimmen eines Bezugssystems (S6), bei dem das erste und zweite Bezugssystem durch Messen der Positionen der ersten und zweiten Markierungen bestimmt werden, und
• einen Vergleichsschritt (S7), bei dem die Positionen des ersten und zweiten Bezugssystems miteinander verglichen werden, um den Positionierungsfehler zwischen der ersten und zweiten Oberfläche zu schätzen.

2. Verfahren nach Anspruch 1, wobei das Verfahren ferner einen Sortierungsschritt (S8) umfasst, bei dem die hergestellte optische Linse akzeptiert wird, falls der Positionierungsfehler zwischen der ersten und zweiten Oberfläche kleiner als oder gleich einem Schwellenwert ist, und verworfen wird, falls der Positionierungswert zwischen der ersten und zweiten Oberfläche größer als der Schwellenwert ist.

3. Verfahren nach Anspruch 1 oder 2, wobei während des Schritts zum Bestimmen eines Bezugssystems die Positionen der ersten und zweiten Markierungen mittels einer optischen Messeinrichtung und unter Einbeziehung von Beobachtungsdaten, die zumindest die Position der optischen Linse relativ zur optischen Messeinrichtung repräsentieren, gemessen werden.

4. Verfahren nach einem der vorhergehenden Ansprüche, wobei während des Schritts zum Bereitstellen von zweiten Markierungen die optische Linse in der gleichen Position wie während des Bearbeitungsschritts gehalten wird.

5. Verfahren nach einem der vorhergehenden Ansprüche, wobei während des Schritts zum Bestimmen eines Bezugssystems die optische Linse in der gleichen Position wie während des Bearbeitungsschritts gehalten wird.

6. Verfahren nach einem der vorhergehenden Ansprüche, wobei die ersten und/oder zweiten Markierungen zeitweilige Markierungen sind.

7. Verfahren nach einem der vorhergehenden Ansprüche, wobei während des Bestimmungsschritts die ersten und zweiten Markierungen in Reflexion gemessen werden.

8. Verfahren nach einem der Ansprüche 2 bis 6, wobei während des Bestimmungsschritts die ersten oder zweiten Markierungen in Reflexion gemessen werden und die anderen der ersten und zweiten Markierungen in Transmission durch die optische Linse gemäß zumindest optischen Daten, die die Brechungseigenschaften der optischen Linse darstellen, gemessen werden.

9. Verfahren nach Anspruch 8, wobei die optischen Daten zumindest das optische Design der ersten und zweiten Oberfläche und die relative Position der zweiten Oberfläche relativ zur ersten Oberfläche darstellen.

10. Verfahren nach Anspruch 8 oder 9, wobei die optischen Daten zumindest die Verschreibung des Trägers, für den die optische Linse hergestellt wird, darstellen.

11. Verfahren zum Steuern eines Linsenherstellungsverfahrens, umfassend:
- einen Schritt zum Herstellen einer optischen Linse, bei dem eine optische Linse gemäß einem Herstellungsverfahren nach einem der vorhergehenden Ansprüche unter Verwendung einer Herstellungseinrichtung hergestellt wird,
- einen Aufzeichnungsschritt, bei dem der Positionierungsfehler aufgezeichnet wird,
wobei das Verfahren ferner ein regelmäßiges Wiederholen von Schritten zum Herstellen einer optischen Linse und zum Aufzeichnen und ein Überprüfen der Evolution des Positionierungsfehlers mit der Zeit umfasst, und
die Evolution mindestens eines Parameters der Herstellungseinrichtung, die während des Linsenherstellungsprozesses verwendet wird, mit der Zeit überprüft wird und die Evolution des Positionierungsfehlers der ersten und zweiten Oberfläche der optischen Linse mit der Zeit mit der Evolution des mindestens einen Parameters der Herstellungseinrichtung mit der Zeit in Bezug gesetzt wird.

12. Verfahren zum Steuern eines Linsenherstellungsverfahrens, umfassend:
- einen Schritt zum Herstellen einer Masterlinse, bei dem eine Masterlinse gemäß einem Herstellungsverfahren nach einem der Ansprüche 1 bis 9 unter Verwendung einer Herstellungseinrichtung hergestellt wird,
- einen Aufzeichnungsschritt, bei dem der Positionierungsfehler aufgezeichnet wird,
wobei das Verfahren ferner ein regelmäßiges Wiederholen von Schritten zur Masterlinsenherstellung und zur Aufzeichnung und ein Überprüfen der Evolution des Positionierungsfehlers mit der Zeit umfasst, und
die Evolution mindestens eines Parameters der Herstellungseinrichtung, die während des Linsenherstellungsprozesses verwendet wird, mit der Zeit überprüft wird und die Evolution des Positionierungsfehlers der ersten und zweiten Oberfläche der Masterlinse mit der Zeit mit der Evolution des zumindest einen Parameters der Herstellungseinrichtung mit der Zeit in Bezug gesetzt wird.

13. Computerprogrammprodukt, umfassend eine oder mehrere gespeicherte Sequenzen von Anwendungen, die einem Prozessor zugänglich sind und die, bei Ausführung durch den Prozessor, den Prozessor dazu veranlassen, die Schritte nach einem der Ansprüche 1 bis 12 durchzuführen.

14. Computerlesbares Medium, das eine oder mehrere Sequenzen von Anweisungen des Computerprogrammprodukts nach Anspruch 13 trägt.

## Revendications

1. Procédé de fabrication d'une lentille optique, le procédé comprenant :
• une étape comprenant de fournir un élément de lentille (S1) au cours de laquelle un élément de lentille comprenant une première surface et un premier système de référence de la première surface est fourni, le premier système de référence étant identifié par des premiers marquages sur la première surface,
• une étape comprenant de fournir des données de surface (S2) au cours de laquelle des données de surface correspondant à une seconde surface et la position de la seconde surface par rapport à la première surface de la lentille optique à fabriquer sont fournies,
• une étape de blocage d'élément de lentille (S3) au cours de laquelle l'élément de lentille est bloqué dans une position d'usinage,
• une étape d'usinage (S4) au cours de laquelle la seconde surface de la lentille optique est usinée en fonction des données de surface,
• une seconde étape comprenant de fournir un marquage (S5) au cours de laquelle des seconds marquages identifiant un second système de référence de la seconde surface sont pratiqués sur la seconde surface de la lentille optique,
• une étape de détermination de système de référence (S6) au cours de laquelle les premier et second systèmes de référence sont déterminés en mesurant les positions des premier et second marquages, et
• une étape de comparaison (S7) au cours de laquelle les positions des premier et second systèmes de référence sont comparées afin d'estimer l'erreur de positionnement entre les première et seconde surfaces.

2. Procédé selon la revendication 1, dans lequel le procédé comprend en outre une étape de tri (S8) au cours de laquelle la lentille optique fabriquée est acceptée si l'erreur de positionnement entre les première et seconde surfaces est inférieure ou égale à une valeur de seuil et est écartée si l'erreur de positionnement entre les première et seconde surfaces est supérieure à ladite valeur de seuil.

3. Procédé selon la revendication 1 ou la revendication 2, dans lequel, au cours de l'étape de détermination du système de référence, les positions des premier et second marquages sont mesurées au moyen d'un dispositif optique de mesure et en tenant compte des données d'observation représentant au moins la position de la lentille optique par rapport au dispositif optique de mesure.

4. Procédé selon l'une quelconque des revendications précédentes, dans lequel, au cours de la seconde étape comprenant de fournir un marquage, la lentille optique est bloquée dans la même position que lors de l'étape d'usinage.

5. Procédé selon l'une quelconque des revendications précédentes, dans lequel, au cours de l'étape de détermination d'un système de référence, la lentille optique est bloquée dans la même position que lors de l'étape d'usinage.

6. Procédé selon l'une quelconque des revendications précédentes, dans lequel les premier et/ou second marquages sont des marquages temporaires.

7. Procédé selon l'une quelconque des revendications précédentes, dans lequel, au cours de l'étape de détermination, les premier et second marquages sont mesurés en réflexion.

8. Procédé selon l'une quelconque des revendications 2 à 6, dans lequel, au cours de l'étape de détermination, l'un des premier et second marquages est mesuré en réflexion et l'autre des premier et second marquages est mesurées en transmission à travers la lentille optique selon au moins des données optiques représentant les propriétés de réfraction de la lentille optique.

9. Procédé selon la revendication 8, dans lequel les données optiques représentent au moins la conception optique des première et seconde surfaces et la position relative de la seconde surface par rapport à la première surface.

10. Procédé selon la revendication 8 ou la revendication 9, dans lequel les données optiques représentent au moins la prescription de l'utilisateur pour lequel la lentille optique est fabriquée.

11. Procédé pour contrôler un procédé de fabrication de lentille comprenant :
- une étape de fabrication de lentille optique au cours de laquelle une lentille optique est fabriquée selon un procédé de fabrication tel que revendiqué dans l'une quelconque des revendications précédentes au moyen d'un dispositif de fabrication,
- une étape d'enregistrement au cours de laquelle l'erreur de positionnement est enregistrée,
où le procédé comprend en outre de répéter régulièrement les étapes de fabrication et d'enregistrement de lentille optique et de vérifier l'évolution de l'erreur de positionnement au cours du le temps, et
l'évolution d'au moins un paramètre du dispositif de fabrication utilisé au cours du processus de fabrication de la lentille est vérifiée au cours du temps, et l'évolution au cours du temps de l'erreur de positionnement des premières et seconde surfaces de la lentille optique est liée à l'évolution au cours du temps de l'au moins un paramètre du dispositif de fabrication.

12. Procédé pour contrôler un procédé de fabrication de lentille comprenant :
- une étape de fabrication de lentille maîtresse au cours de laquelle une lentille maîtresse est fabriquée selon un procédé de fabrication tel que revendiqué dans l'une quelconque des revendications 1 à 9 au moyen d'un dispositif de fabrication,
- une étape d'enregistrement au cours de laquelle l'erreur de positionnement est enregistrée,
où le procédé comprend en outre de répéter régulièrement les étapes d'enregistrement et de fabrication de la lentille maîtresse et de vérifier l'évolution de l'erreur de positionnement au cours du temps, et
l'évolution d'au moins un paramètre du dispositif de fabrication utilisé au cours du processus de fabrication de la lentille est vérifiée au cours du temps, et l'évolution au cours du temps de l'erreur de positionnement des première et seconde surfaces de la lentille maîtresse est liée à l'évolution au cours du temps de l'au moins un paramètre du dispositif de fabrication.

13. Produit programme informatique comprenant une ou plusieurs séquences d'instructions stockées qui sont accessibles à un processeur et qui, lorsqu'elles sont exécutées par le processeur, amènent le processeur à exécuter les étapes selon l'une quelconque des revendications 1 à 12.

14. Support lisible par ordinateur stockant une ou plusieurs séquences d'instructions du produit programme informatique de la revendication 13.
